# EUROPEAN PATENT SPECIFICATION

(11) **EP 1 566 041 B1**
(45) Date of publication and mention of the grant of the patent: **11.03.2009**
(21) Application number: 03812210.7
(22) Date of filing: 14.08.2003
(51) Int. Cl.: H04L 29/06

(54) **HIGH-PERFORMANCE LOCK MANAGEMENT FOR FLASH COPY IN N-WAY SHARED STORAGE SYSTEMS**
VERRIEGELUNGSVERWALTUNG MIT HOHER LEISTUNGSFÄHIGKEIT FÜR FLASH-KOPIE IN N-FACH GEMEINSAM BENUTZTEN SPEICHERSYSTEMEN
CONTROLE DE VERROU HAUTE PERFORMANCE POUR COPIE FLASH DANS DES SYSTEMES DE STOCKAGE PARTAGE A N VOIES

(30) Priority: 29.11.2002 GB 0227825
(43) Date of publication of application: 24.08.2005
(73) Proprietor: International Business Machines Corporation, Armonk, NY 10504 (US)
(72) Inventor: FUENTE, Carlos, Francisco, Portsmouth, Hampshire PO1 2TY (GB); SCALES, William, James, Fareham, Hampshire PO16 8AD (GB)
(74) Representative: Williams, Julian David
(86) International application number: PCT/GB2003/003567
(87) International publication number: WO 2004/051473

(56) References cited:
- S B SIDDHA, K GOPINATH: "A Persistent Snapshot Device Driver for Linux" PROCEEDINGS OF THE 5TH ANNUAL LINUX SHOWCASE AND CONFERENCE - ALS2001, [Online] 10 November 2001 (2001-11-10), pages 173-182, XP002317993 Retrieved from the Internet: URL:http://www.usenix.org/publications/lib rary/proceedings/als01/full_papers/siddha/ siddha.pdf> [retrieved on 2005-02-16]
- BURNS R C ET AL: "Consistency and locking for distributing updates to web servers using a file system" ACM SIGMETRICS PERFORMANCE EVALUATION REVIEW, vol. 28, no. 2, September 2000 (2000-09), pages 15-21, XP002317994 ACM PRESS, NEW YORK, NY, USA ISSN: 0163-5999
- R C BURNS: "DATA MANAGEMENT IN A DISTRIBUTED FILE SYSTEM FOR STORAGE AREA NETWORKS" PHD THESIS, March 2000 (2000-03), XP002317995 SUBMITTED AT THE UNIVERSITY OF CALIFORNIA, SANTA CRUZ, PAGES 17-38, 79-100
- HOWARD J H ET AL: "SCALE AND PERFORMANCE IN A DISTRIBUTED FILE SYSTEM" ACM TRANSACTIONS ON COMPUTER SYSTEMS, ASSOCIATION FOR COMPUTING MACHINERY. NEW YORK, US, vol. 6, no. 1, 1 February 1988 (1988-02-01), pages 51-81, XP000104730 ISSN: 0734-2071

## Description

### Field of the Invention

The present invention relates to the field of computer storage controllers, and particularly to advanced function storage controllers in n-way shared storage systems providing a Flash Copy function.

### Background of the Invention

In the field of computer storage systems, there is increasing demand for what have come to be described as "advanced functions". Such functions go beyond the simple I/O functions of conventional storage controller systems. Advanced functions are well known in the art and depend on the control of metadata used to retain state data about the real or "user" data stored in the system. The manipulations available using advanced functions enable various actions to be applied quickly to virtual images of data, while leaving the real data available for use by user applications. One such well-known advanced function is 'Flash Copy'.

At the highest level, Flash Copy is a function where a second image of 'some data' is made available. This function is sometimes known as Point-In-Time copy, or T0-copy. The second image's contents are initially identical to that of the first. The second image is made available 'instantly'. In practical terms this means that the second image is made available in much less time than would be required to create a true, separate, physical copy, and that this means that it can be established without unacceptable disruption to a using application's operation.

Once established, the second copy can be used for a number of purposes including performing backups, system trials and data mining. The first copy continues to be used for its original purpose by the original using application. Contrast this with backup without Flash Copy, where the application must be shut down, and the backup taken, before the application can be restarted again. It is becoming increasingly difficult to find time windows where an application is sufficiently idle to be shut down. The cost of taking a backup is increasing. There is significant and increasing business value in the ability of Flash Copy to allow backups to be taken without stopping the business.

Flash Copy implementations achieve the illusion of the existence of a second image by redirecting read I/O addressed to the second image (henceforth Target) to the original image (henceforth Source), unless that region has been subject to a write. Where a region has been the subject of a write (to either Source or Target), then to maintain the illusion that both Source and Target own their own copy of the data, a process is invoked which suspends the operation of the write command, and without it having taken effect, issues a read of the affected region from the Source, applies the read data to the Target with a write, then (and only if all steps were successful) releases the suspended write. Subsequent writes to the same region do not need to be suspended since the Target will already have its own copy of the data. This copy-on-write technique is well known and is used in many environments.

All implementations of Flash Copy rely on a data structure which governs the decisions discussed above, namely, the decision as to whether reads received at the Target are issued to the Source or the Target, and the decision as to whether a write must be suspended to allow the copy-on-write to take place. The data structure essentially tracks the regions or grains of data that have been copied from source to target, as distinct from those that have not.

Maintenance of this data structure (hereinafter called metadata) is key to implementing the algorithm behind Flash Copy.

Flash Copy is relatively straightforward to implement within a single CPU complex (possibly with SMP processors), as is often employed within modern storage controllers. With a little more effort, it is possible to implement fault tolerant Flash Copy, such that (at least) two CPU complexes have access to a copy of the metadata. In the event of a failure of the first CPU complex, the second can be used to continue operation, without loss of access to the Target Image.

However, the I/O capability of a single CPU complex is limited. Though improving the capabilities of a single CPU complex measured in terms of either I/Os per second, or bandwidth (MB/s) has a finite limit, and will eventually impose a constraint on the performance of the using applications. This limit arises in many implementations of Flash Copy, but a good example is in Storage Controllers. A typical storage controller has a single (or possibly a redundant pair) of CPU complexes, which dictate a limit in the performance capability of that controller.

More storage controllers can be installed. But the separate storage controllers do not share access to the metadata, and therefore do not cooperate in managing a Flash Copy image. The storage space becomes fragmented, with Flash Copy being confined to the scope of a single controller system. Both Source and Target disks must be managed within the same storage controller. A single storage controller disk space might become full, while another has some spare space, but it is not possible to separate the Source and Target disks, placing the Target disk under the control of the new controller. (This is particularly unfortunate in the case of a new Flash Copy, where moving the Target is a cheap operation, as it has no physical data associated with it).

As well as constraining the total performance possible for a Source/Target pair, the constraint of single-controller storage functions adds complexity to the administration of the storage environment.

Typically, storage control systems today do not attempt to solve this problem. They implement Flash Copy techniques that are confined to a single controller, and hence are constrained by the capability of that controller.

A simple way of allowing multiple controllers to participate in a shared Flash Copy relationship is to assign one controller as the Owner of the metadata, and have the other controllers forward all read and write requests to that controller. The owning controller processes the I/O requests as if they came directly from its own attached host servers, using the algorithm described above, and completes each I/O request back to the originating controller.

The main drawback of such a system, and the reason that it is not widely used, is that the burden of forwarding each I/O request is too great, possibly even doubling the total system-wide cost, and hence approximately halving the system performance.

It is known, for example, in the area of distributed parallel database systems, to have a distributed lock management structure employing a two-phase locking protocol to hold locks on data in order to maintain any copies of the data in a coherency relation. However, two phase locking is typically time-consuming and adds a considerable messaging burden to the processing. As such, an unmodified two-phase locking protocol according to the prior art is disadvantageous in systems at a lower level in the software and hardware stack, such as storage area networks having distributed storage controllers where the performance impact of the passing of locking control messages is even more significant than it is at the database control level.

It is known, for example from "A Persistent Device Driver for Linux", by Siddha and Gopinath, PROC. 5TH ANNUAL LINUX SHOWCASE AND CONFERENCE, (2001-11-10), and from "Consistency and Locking for Distributing Updates to Web Servers Using a File System", by Burns, ACM SIGMETRICS PERFORMANCE EVALUATION REVIEW (2000-09), to have global lock management of metadata for a snapshot-capable clustered file system or database. It is also known from, for example, "Data Management in a Distributed File System for Storage Area Networks", by Burns, UCSC PH.D. THESIS, (2000-03), and from "Scale and Performance in a Distributed File System", by Howard et al., ACM TRANSACTIONS ON COMPUTER SYSTEMS, (1988-02-01) to apply selective cache discard in a SAN environment.

It would therefore be desirable to gain the advantages of distributed lock management in a Flash Copy environment while incurring the minimum lock messaging overhead.

### Summary of the Invention

The present invention accordingly provides, in a first aspect, a storage control apparatus operable in a network of storage controller nodes having an owner storage controller node operable to control locking of a region of data during I/O activity, a messaging component operable to pass at least one message to request a lock, grant a lock, request release of a lock, and signal that a lock has been released; comprising an I/O performing component operable to perform I/O on data owned by any said owner storage controller node, subject to said I/O performing component's compliance with lock protocols controlled by said owner storage controller node; wherein any Flash Copy image of said region of data is maintained in a coherency relation with said region of data; and wherein said I/O performing component is operable to cache a previous positive confirmation that said region of data has been left in a coherency relation with any said Flash Copy image, and to perform I/O activity on the basis of said previous positive confirmation; and wherein a positive confirmation for said region of data further comprises any positive confirmation for a further region of data that is contiguous with said region of data.

Preferably, said I/O performing component is operable to discard a cached positive confirmation and to subsequently request a lock afresh.

Preferably, a reduced cache storage area is managed by selectively discarding a cached positive confirmation.

The present invention provides, in a second aspect, a method of storage control in a network of storage controller nodes having an owner storage controller node operable to control locking of a region of data during I/O activity, a messaging component operable to pass at least one message to request a lock, grant a lock, request release of a lock, and signal that a lock has been released, the method comprising the steps of performing I/O on data owned by any said owner storage controller node, subject to compliance with lock protocols controlled by said owner storage controller node; maintaining Flash Copy of said region of data in a coherency relation with said region of data; and caching a previous positive confirmation that said region of data has been left in a coherency relation with any said Flash Copy image, and performing I/O activity on the basis of said previous positive confirmation.

Preferably, the method of the second aspect further comprises the step of discarding a cached positive confirmation and subsequently requesting a lock afresh.

Preferably, the method of the second aspect further comprises managing a reduced cache storage area by selectively discarding a cached positive confirmation.

Preferably, a positive confirmation for said region of data further comprises any positive confirmation for a further region of data that is contiguous with said region of data.

In a third aspect, the present invention provides a computer program product tangibly embodied in a computer-readable storage medium, comprising computer program code means to, when loaded into a computer system and executed thereon, cause storage control apparatus in a network of storage controller nodes having an owner storage controller node operable to control locking of a region of data during I/O activity, a messaging component operable to pass at least one message to request a lock, grant a lock, request release of a lock, and signal that a lock has been released, to perform the steps of performing I/O on data owned by any said owner storage controller node, subject to compliance with lock protocols controlled by said owner storage controller node; maintaining Flash Copy of said region of data in a coherency relation with said region of data; and caching a previous positive confirmation that said region of data has been left in a coherency relation with any said Flash Copy image, and performing I/O activity on the basis of said previous positive confirmation.

The presently preferred embodiment of the present invention employs a modified two-phase lock messaging scheme to co-ordinate activity among plural storage controllers (or nodes) in an n-way system. The messaging co-ordinates activity between the nodes in the system, but each node is still responsible for performing its own I/O. Each of the nodes is provided with a caching facility to cache the results of its previous lock requests, so that it can reuse certain of the results to avoid the necessity of querying the status of a region of data if the status is already positively indicated by the cached previous results.

### Brief Description of the Drawings

A preferred embodiment of the present invention will now be described by way of example only, with reference to the accompanying drawings, in which:
Figure 1 is a flow diagram illustrating one embodiment of a two-phase locking scheme using lock messages to control coherency between a region of data and a Flash Copy image of the data;
Figure 2 shows the system components of a system according to the preferred embodiment of the present invention; and
Figure 3 shows the additional steps of the preferred embodiment of the present invention.

### Detailed Description of the Preferred Embodiment

For better understanding of the presently preferred embodiment of the present invention, it is necessary to describe the use of two-phase lock messaging to co-ordinate activity between plural storage controllers (or nodes) in an n-way storage system.

As an example, consider an n-way system implementing Flash Copy. Assume every node has access to the storage managed by the co-operating set of n nodes. One of the nodes is designated as an owner (102) for metadata relating to all I/O relationships of a region of storage. The other nodes are designated as clients. In a presently most preferred embodiment, one of the client nodes is further designated as a backup owner and maintains a copy of the metadata in order to provide continuous availability in the event of a failure of the owner node.

Consider a host I/O request arriving (104) at a particular client node ('C'). Suppose that the host I/O request is either a Read or Write of the Target disk, or possibly a Write of the Source disk. Client C begins processing by suspending (106) the I/O. C then sends (108) a message REQ to the Owner node O, asking if the grain has been copied.

On receipt of message REQ, O inspects its own metadata structures. If O finds that the region has already been copied, O replies (110) with a NACK message. If O finds that the region has not already been copied, it places a lock record against the appropriate metadata for the region within its own metadata structures, and replies (112) with a GNT message. The lock record is required to ensure compatibility between the request just received and granted, and further requests that might arrive affecting the same metadata while the processing at C continues. The details of how the lock record is maintained, and what the compatibility constraints are, are the same as if the I/O had been received locally by O, and are well known to those skilled in the art.

On receipt of a NACK message, C unpends (114) the original I/O request.

On receipt of the GNT message, C continues (116) by performing the data transfer or transfers required by the Flash Copy algorithm. In the case of a Target Read, this means performing the read to the source disk. Some time later, C will process completion (118) for the read request, and will issue (120) an UNL message to O, at the same time as completing the original I/O request to the host system that issued it.

O, on receipt of an UNL message, removes (122) the lock record from its metadata table, thus possibly releasing further I/O requests that were suspended because of that lock. In the presently most preferred embodiment, O then delivers (124) a UNLD message to C, allowing C to reuse the resources associated with the original request. This is, however, not required by the Flash Copy algorithm itself.

In the case of a write (to either Target or Source) C must perform the copy-on-write (127). Having completed all steps of the copy-on-write, and with the original write I/O request still suspended, C issues (126) an UNLC request to O.

O, on receipt of an UNLC message, marks (128) in the metadata the region affected as having been copied, removes (130) the lock record, informs (132) any waiting requests that the area has now been copied, and then issues (134) an UNLD message to C.

C, on receipt of a UNLD message, releases (136) the suspended write operation, which will some time later complete, and then C completes (138) the write operation to the host.

Recovery paths are required to cater for the situation where a disk I/O fails, or the messaging system fails, or a node fails, but the requirements and implementations of these are well understood in the art.

The above description was from the point of view of a single I/O, and a single Client C. But it is clear how the scheme continues to operate in the presence of multiple I/Os, from multiple client nodes, with O continuing to process all requests by the same algorithm.

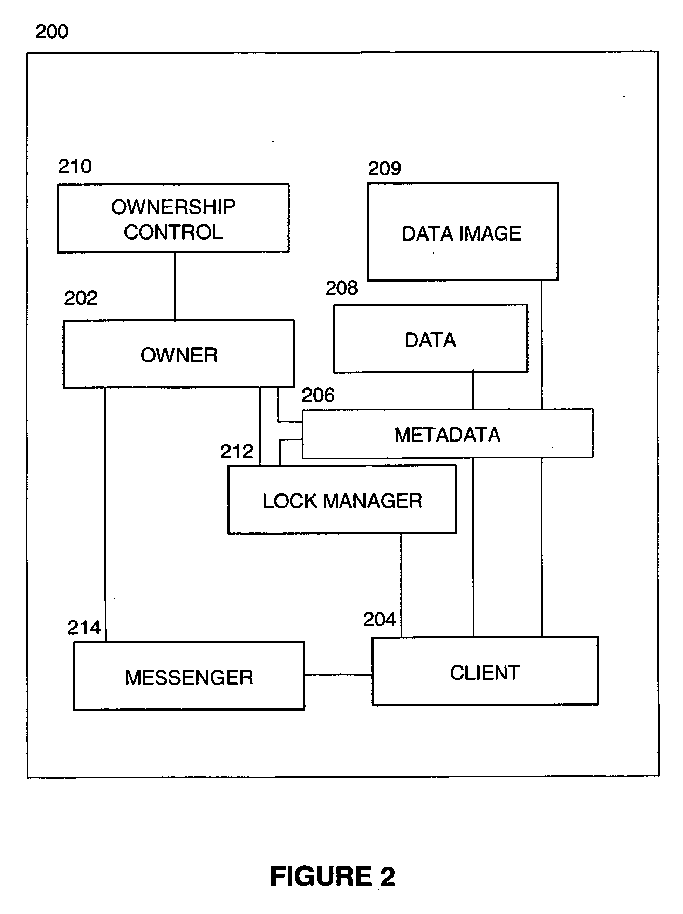

Turning now to Figure 2, there is shown an apparatus in accordance with a presently preferred embodiment of the invention, the apparatus embodied in a storage controller network comprising an Owner (202), a Client (204) I/O performing component, a portion of metadata (206) relating to data (208) held under the control of the storage network, a copy (209) of the data (208), and communication means. The apparatus includes an ownership assignment component (210) to assign ownership of metadata to the Owner (202), and a lock management component (212) operable to control locking at said metadata (206) level during I/O activity to ensure coherency with any copy (209). Included also is a messaging component (214) at the Owner (202), the messaging component (214) being operable to pass one or more messages between Client (204) and Owner (202) to request a response regarding a metadata state, grant a lock, request release of a lock, and signal that a lock has been released. The Client (204) is operable to perform I/O on data whose metadata is owned by any Owner (202), subject to the Client's (204) compliance with the lock protocols at the metadata level controlled by said Owner (202).

The system and method thus described are capable of handling distributed lock management in an n-way shared storage controller network, but have the disadvantage that there is considerable messaging overhead in the system. This is not burdensome in systems containing relatively few controllers or where there is relatively little activity, but in modern storage systems, such as very large storage area networks, there are likely to be many controllers and a very high level of storage activity. In such circumstances, the avoidance of unnecessary messaging overhead would be advantageous.

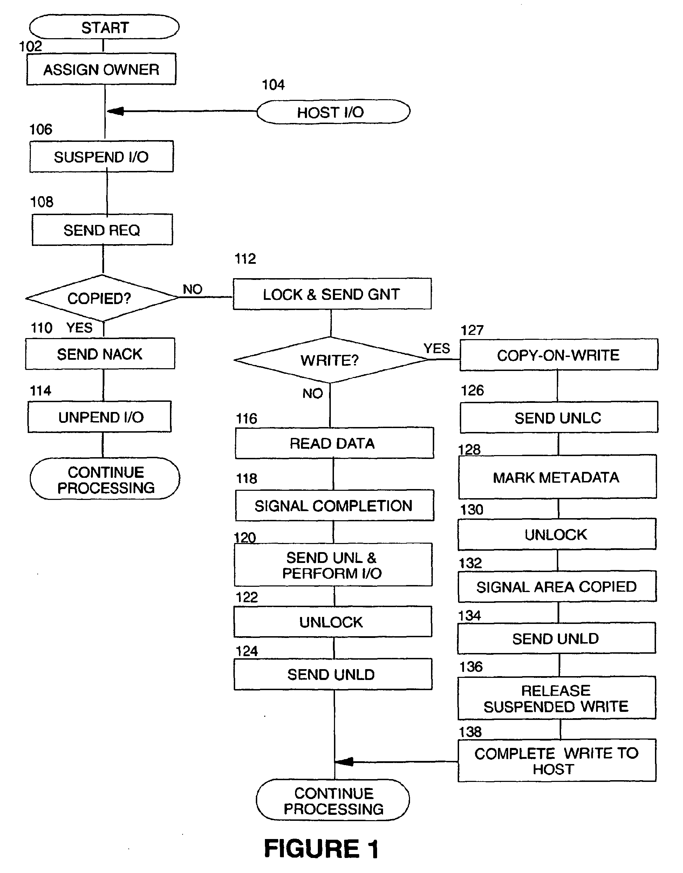

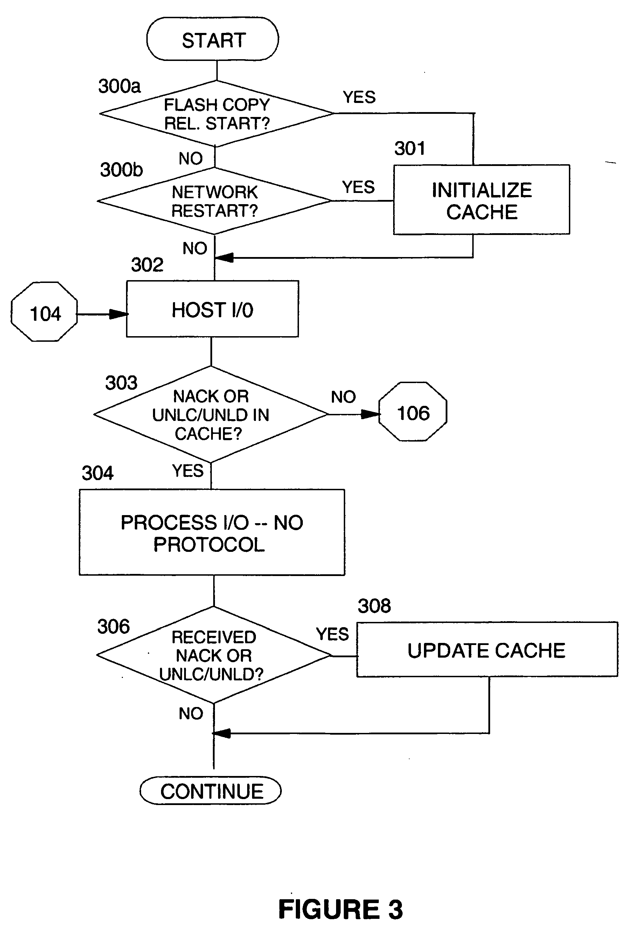

Thus, to improve the processing performance of the system, in the most preferred embodiment of the present invention, each client node is provided with the ability to maintain information which records the last response received from an Owner. Specifically (described in terms of the additions to Figure 1 according to Figure 3), the client node C is permitted to cache (308) the information that it received a NACK after step 114 of Figure 1, or that itself issued and had acknowledged an UNLC/UNLD pair at step 126 and after step 134 of Figure 1.

On receipt (302) of a host I/O request as at step 104 of Figure 1, Client C now applies a modified lock control algorithm, as follows.

C first inspects its cached data (303), to see if it has a positive indication that the region affected has already been copied. If it has, then it continues (304) with the I/O without sending any protocol messages to O.

If the cache contains no such positive indication, the unmodified protocol described above is used. Client C proceeds with step 106 and following of Figure 1. The receipt (306) of a NACK or an UNLC/UNLD pair causes the cache of information to be updated (308), and subsequent I/Os that affect that region, finding this information in the cache at (303), can proceed (304) without issuing any protocol messages.

The term 'pessimistic cache' is sometimes used to describe the approach needed in the presently most preferred embodiment of the present invention. This means that the client need not be fully up-to-date with the Owner's metadata; the client may believe an area needs to be copied, and be corrected by the owner (NACK) to say it does not. However, the client must never believe that an area has been copied when the owner knows it has not.

The lock caching of the presently preferred embodiment requires certain changes to the client for correct operation. First, the cache must be initialised (301) (to indicate that all regions must be copied) each time a Flash Copy relationship is started (300a). This might be driven in a number of ways, but a message from Owner to Client is the most straightforward to implement. Second, any time a client node might have missed a message (300b) indicating that the cache has been reinitialised (perhaps because of a network disturbance), the client must assume the worst case and reinitialise (301) or revalidate its cache.

Further extensions and variations are possible, as will be clear to one skilled in the art. For example the cached information is discardable, as it can always be recovered from the owner node, which has the only truly up-to-date copy. Thus, the client could have less metadata space allocated for caching information than would be required to store all the metadata held on all the nodes. The clients could then rely on locality of access for the I/Os they process to ensure that they continue to benefit from the caching of the lock message information.

In a further extended embodiment, a NACK message (and also the GNT or UNLD messages) can carry back more information than that relating to the region being directly processed by the REQ/GNT/UNLC/UNLD messages. Information concerning neighbouring regions that have also been cleaned can be sent from owners to clients. -

It will be appreciated that the method described above will typically be carried out in software running on one or more processors (not shown), and that the software may be provided as a computer program element carried on any suitable data carrier (also not shown) such as a magnetic or optical computer disc. The channels for the transmission of data likewise may include storage media of all descriptions as well as signal carrying media, such as wired or wireless signal media.

The present invention may suitably be embodied as a computer program product for use with a computer system. Such an implementation may comprise a series of computer readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

It will be appreciated that various modifications to the embodiment described above will be apparent to a person of ordinary skill in the art.

## Claims

1. A storage control apparatus operable in a network of storage controller nodes having an owner storage controller node (202) operable to control locking of a region of data during I/O activity, a messaging component (214) operable to pass at least one message to request a lock, grant a lock, request release of a lock, and signal that a lock has been released; comprising:
an I/O performing component (204) operable to perform I/O on data (208) owned by any said owner storage controller node (202), subject to said I/O performing component's compliance with lock protocols controlled by said owner storage controller node (202);
wherein any Flash Copy image (209) of said region of data is maintained in a coherency relation with said region of data; wherein:
said I/O performing component (204) is operable to cache a previous positive confirmation that said region of data has been left in a coherency relation with any said Flash Copy image (209), and to perform I/O activity on the basis of said previous positive confirmation; and
**characterised in that** a positive confirmation for said region of data further comprises any positive confirmation for a further region of data that is contiguous with said region of data.

2. An apparatus as claimed in claim 1, wherein said I/O performing component is operable to discard a cached positive confirmation and to subsequently request a lock afresh.

3. An apparatus as claimed in claim 1, wherein a reduced cache storage area is managed by selectively discarding a cached positive confirmation.

4. A method of storage control in a network, of storage controller nodes having an owner storage controller node (202) operable to control locking of a region of data during I/O activity, a messaging component (214) operable to pass at least one message to request a lock, grant a lock, request release of a lock, and signal that a lock has been released, the method comprising the steps of:
performing I/O on data owned by any said owner storage controller node (202), subject to compliance with lock protocols controlled by said owner storage controller node (202);
maintaining Flash Copy of said region of data in a coherency relation with said region of data;
caching a previous positive confirmation that said region of data has been left in a coherency relation with any said Flash Copy image, and performing I/O activity on the basis of said previous positive confirmation; and
**characterised in that**
a positive confirmation for said region of data further comprises any positive confirmation for a further region of data that is contiguous with said region of data.

5. A method as claimed in claim 4, further comprising the step of discarding a cached positive confirmation and subsequently requesting a lock afresh.

6. A method as claimed in claim 5, further comprising managing a reduced cache storage area by selectively discarding a cached positive confirmation.

7. A computer program product tangibly embodied in a computer-readable storage medium, comprising computer program code means to, when loaded into a computer system and executed thereon, cause said computer system to perform all the steps of a method according to any one of claims 4 to 6.

## Patentansprüche

1. Speichersteuervorrichtung, die in einem Netz von Speichersteuereinheitknoten betrieben werden kann, das Folgendes aufweist: einen Eigner-Steuereinheitknoten (202), der funktionsmäßig zum Steuern des Sperrens eines Bereichs von Daten während der Ein-/Ausgabeaktivität geeignet ist, eine Nachrichtenübermittlungskomponente (214), die funktionsmäßig zum Weiterleiten von mindestens einer Nachricht zum Anfordern einer Sperre geeignet ist, und ein Signal, dass eine Sperre freigegeben wurde; wobei die Vorrichtung Folgendes umfasst:
eine Komponente (204) zur Ein-/Ausgabeausführung, die funktionsmäßig zum Ausführen der Ein-/Ausgabe von dem Eigner-Steuereinheitknoten (202) zugeordneten Daten (208) geeignet ist, in Abhängigkeit von der Übereinstimmung der Komponente zur Ein-/Ausgabeausführung mit Sperrprotokollen (lock protocols), die vom Eigner-Steuereinheitknoten (202) gesteuert werden;
wobei jedes Flash-Kopieabbild (Flash Copy image) (209) des Bereichs von Daten in einer Kohärenzbeziehung mit dem Bereich von Daten gehalten wird; wobei:
die Komponente (204) zur Ein-/Ausgabeausführung funktionsmäßig geeignet ist, eine vorhergehende positive Bestätigung zwischenzuspeichern, dass der Bereich von Daten in einer Kohärenzbeziehung mit jedem Flash-Kopieabbild (209) belassen wurde, und um die Ein-/Ausgabeaktivität auf der Grundlage der vorhergehenden positiven Bestätigung auszuführen; und
**dadurch gekennzeichnet, dass**
eine positive Bestätigung für den Bereich von Daten außerdem jede positive Bestätigung für einen weiteren Bereich von Daten umfasst, der an den Bereich von Daten angrenzt.

2. Vorrichtung nach Anspruch 1, wobei die Komponente zur Ein-/Ausgabeausführung funktionsmäßig geeignet ist, eine zwischengespeicherte positive Bestätigung zu löschen und anschließend eine erneute Sperre anzufordern.

3. Vorrichtung nach Anspruch 1, wobei ein verringerter Cachespeicherbereich durch selektives Löschen einer zwischengespeicherten positiven Bestätigung verwaltet wird.

4. Verfahren zur Speichersteuerung in einem Netz von Speichersteuereinheitknoten, das Folgendes aufweist: einen Eigner-Steuereinheitknoten (202), der funktionsmäßig zum Steuern des Sperrens eines Bereichs von Daten während der Ein-/Ausgabeaktivität geeignet ist, eine Nachrichtenübermittlungskomponente (214), die funktionsmäßig zum Weiterleiten von mindestens einer Nachricht zum Anfordern einer Sperre, Erteilen einer Sperre, Anfordern der Freigabe einer Sperre geeignet ist, und ein Signal, dass eine Sperre freigegeben wurde, wobei das Verfahren die folgenden Schritte umfasst:
Ausführen der Ein-/Ausgabe von jedem Eigner-Steuereinheitknoten (202) zugeordneten Daten in Abhängigkeit von einer Übereinstimmung mit Sperrprotokollen, die vom Eigner-Steuereinheitknoten (202) gesteuert werden;
Halten einer Flash-Kopie des Bereichs von Daten in einer Kohärenzbeziehung mit dem Bereich von Daten;
Zwischenspeichern einer vorhergehenden positiven Bestätigung, dass der Bereich von Daten in einer Kohärenzbeziehung mit jedem Flash-Kopieabbild belassen wurde, und Ausführen der Ein-/Ausgabeaktivität auf der Grundlage der vorhergehenden positiven Bestätigung; und
**dadurch gekennzeichnet, dass**
eine positive Bestätigung für den Bereich von Daten außerdem jede positive Bestätigung für einen weiteren Bereich von Daten umfasst, der an den Bereich von Daten angrenzt.

5. Verfahren nach Anspruch 4, das außerdem den Schritt des Löschens einer zwischengespeicherten positiven Bestätigung und des anschließenden Anforderns einer erneuten Sperre umfasst.

6. Verfahren nach Anspruch 5, das außerdem das Verwalten eines verringerten Cachespeicherbereichs durch selektives Löschen einer zwischengespeicherten positiven Bestätigung umfasst.

7. In einem computerlesbaren Speichermedium enthaltenes Computerprogrammprodukt, das ein Computerprogrammcodemittel umfasst, welches, wenn es in ein Computersystem geladen und auf diesem ausgeführt wird, das Computersystem veranlasst, alle Schritte eines Verfahrens nach irgendeinem der Ansprüche 4 bis 6 auszuführen.

## Revendications

1. Dispositif de commande de mémorisation pouvant être mis en oeuvre dans un réseau de noeuds contrôleurs de mémorisation comportant un noeud contrôleur de mémorisation propriétaire (202) pouvant être mis en oeuvre pour commander le verrouillage d'une région de données au cours d'une activité d'entrée/sortie, un composant de messagerie (214) pouvant être mis en oeuvre pour transmettre au moins un message pour demander un verrou, accorder un verrou, demander la libération d'un verrou et signaler qu'un verrou a été libéré, comprenant :
un composant (204) exécutant des entrées/sorties pouvant être mis en oeuvre pour exécuter des entrées/sorties sur des données (208) possédées par un quelconque dit noeud contrôleur de mémorisation propriétaire (202), sous réserve de la conformité dudit composant exécutant des entrées/sorties à des protocoles de verrouillage commandés par ledit noeud contrôleur de mémorisation propriétaire (202),
où une image de type Flash Copy quelconque (209) de ladite région de données est maintenue dans une relation de cohérence avec ladite région de données, où,
ledit composant exécutant des entrées/sorties (204) peut être mis en oeuvre pour mettre en antémémoire une confirmation positive précédente du fait que ladite région de données a été laissée dans une relation de cohérence avec une image quelconque de type Flash Copy (209) et pour exécuter une activité d'entrée/sortie sur la base de ladite confirmation positive précédente, et
**caractérisé en ce qu'**une confirmation positive concernant ladite région de données comprend en outre toute confirmation positive concernant une autre région de données qui est contiguë à ladite région de données.

2. Dispositif selon la revendication 1, dans lequel ledit composant exécutant des entrées/sorties peut être mis en oeuvre pour ignorer une confirmation positive mise en antémémoire et pour demander ultérieurement de nouveau un verrouillage.

3. Dispositif selon la revendication 1, dans lequel une zone de mémorisation en antémémoire réduite est gérée en ignorant sélectivement une confirmation positive mise en antémémoire.

4. Procédé de commande de mémorisation dans un réseau de noeuds contrôleurs de mémorisation comportant un noeud contrôleur de mémorisation propriétaire (202) pouvant être mis en oeuvre pour commander le verrouillage d'une région de données au cours d'une activité d'entrée/sortie, un composant de messagerie (214) pouvant être mis en oeuvre pour transmettre au moins un message pour demander un verrou, accorder un verrou, demander la libération d'un verrou et signaler qu'un verrou a été libéré, le procédé comprenant les étapes consistant à :
exécuter des entrées/sorties sur des données possédées par un quelconque dit noeud contrôleur de mémorisation propriétaire (202) sous réserve de la conformité auxdits protocoles de verrouillage commandés par ledit noeud contrôleur de mémorisation propriétaire (202),
maintenir une image de type Flash Copy de ladite région de données dans une relation de cohérence avec ladite région de données,
mettre en antémémoire une confirmation positive précédente du fait que ladite région de données a été laissée dans une relation de cohérence avec toute dite image de type Flash Copy, et exécuter une activité d'entrée/sortie sur la base de ladite confirmation positive précédente, et **caractérisé en ce que**
une confirmation positive pour ladite région de données comprend en outre toute confirmation positive pour une autre région de données qui est contiguë à ladite région de données.

5. Procédé selon la revendication 4, comprenant en outre l'étape consistant à ignorer une confirmation positive mise en antémémoire et à demander ensuite à nouveau un verrouillage.

6. Procédé selon la revendication 5, comprenant en outre la gestion d'une zone de mémorisation en antémémoire réduite en ignorant sélectivement une confirmation positive mise en antémémoire.

7. Produit de programme informatique incorporé de manière tangible dans un support de mémorisation lisible par un ordinateur, comprenant un moyen de code de programme informatique destiné, lorsqu'il est chargé dans un système informatique et exécuté sur celui-ci, à amener ledit système informatique à exécuter la totalité des étapes du procédé selon l'une quelconque des revendications 4 à 6.
